# EUROPEAN PATENT SPECIFICATION

(11) **EP 3 556 587 B1**
(45) Date of publication and mention of the grant of the patent: **18.11.2020**
(21) Application number: 19169825.7
(22) Date of filing: 17.04.2019
(51) Int. Cl.: B60H 1/00, H01M 10/625, H01M 10/61

(54) **POWER SUPPLY DEVICE FOR VEHICLE**
STROMVERSORGUNGSVORRICHTUNG FÜR EIN FAHRZEUG
DISPOSITIF D'ALIMENTATION EN ÉNERGIE POUR VÉHICULE

(30) Priority: 18.04.2018 JP 2018079619
(43) Date of publication of application: 23.10.2019
(73) Proprietor: Honda Motor Co., Ltd., Tokyo 107-8556 (JP)
(72) Inventor: OGAKI, Toru, Saitama, 351-0193 (JP); ONUMA, Yoshikazu, Saitama, 351-0193 (JP); SAITA, Akira, Saitama, 351-0193 (JP); FUJIMAKI, Keisuke, Saitama, 351-0193 (JP); KASAI, Kodai, Saitama, 351-0193 (JP); TAKAHASHI, Atsushi, Saitama, 351-0193 (JP)
(74) Representative: Weickmann & Weickmann PartmbB

(56) References cited:
- EP-A1- 1 876 051
- US-A- 5 490 572
- US-A1- 2003 080 714
- US-A1- 2011 016 899

## Description

### BACKGROUND OF THE INVENTION

### FIELD OF THE INVENTION

The present invention relates to a power supply device for a vehicle comprising a battery for driving the vehicle, an air conditioning device that carries out air conditioning of an interior of a vehicle compartment with electric power of the battery, a battery temperature regulating device that adjusts a battery temperature with the electric power of the battery, and control means that controls operation of the air conditioning device and the battery temperature regulating device.

### DESCRIPTION OF THE RELATED ART

Japanese Patent Application Laid-open No. 2012-44813 has made known an arrangement in which, when control means that controls charging of a battery of an electric vehicle determines a charging start time based on a scheduled starting time of the vehicle and the state of the battery, charging of the battery is completed by the scheduled starting time of the vehicle by operating a heater or a fan so that the temperature of the battery at the charging start time satisfies preset temperature conditions.

Since the possible travel distance of an electric vehicle depends greatly on the temperature of the battery, battery temperature regulation control is carried out by heating or cooling the battery in accordance with the scheduled departure time of the vehicle so as to appropriately adjust the temperature. When, in parallel with this temperature control for the battery, air conditioning control for appropriately adjusting the temperature of the interior of a vehicle compartment in accordance with the scheduled departure time is carried out, since both the battery temperature regulation control and the air conditioning control are carried out with consumption of the electric power of the battery, there is a possibility that the load on the battery will increase and the possible cruising distance will decrease.

Document US 5 490 572 A which is considered to be closest prior art discloses a power supply for a vehicle comprising a battery, an air conditioning device, a battery temperature regulating device, and control means that control operation of the air conditioning device and the battery temperature regulating device, wherein the control means comprise an air conditioning control part that starts operation of the air conditioning device at an air conditioning start time. Furthermore, documents US 2011/016899 A1, US 2003/080714 A1, and EP 1 876 051 A1 shall be mentioned at this point.

### SUMMARY OF THE INVENTION

The present invention has been accomplished in light of the above circumstances, and it is an object thereof to achieve a balance between battery temperature regulation control and air conditioning control while suppressing any increase in the load on a battery.

In order to achieve the object, according to a first aspect of the present invention, there is provided a power supply device for a vehicle comprising a battery for driving the vehicle, an air conditioning device that carries out air conditioning of an interior of a vehicle compartment with electric power of the battery, a battery temperature regulating device that adjusts a battery temperature with the electric power of the battery, and control means that controls operation of the air conditioning device and the battery temperature regulating device, wherein the control means comprises an air conditioning control part that starts operation of the air conditioning device at an air conditioning start time preset by a user, and a battery temperature control part that sets a battery temperature regulation start time at which operation of the battery temperature regulating device is started based on the air conditioning start time and a battery temperature.

In accordance with the first aspect, the power supply device for a vehicle includes the battery for driving the vehicle, the air conditioning device, which carries out air conditioning of the interior of the vehicle compartment with electric power of the battery, the battery temperature regulating device, which adjusts the battery temperature with the electric power of the battery, and the control means, which controls operation of the air conditioning device and the battery temperature regulating device. Since the control means includes the air conditioning control part, which starts operation of the air conditioning device at an air conditioning start time preset by a user, and the battery temperature control part, which sets a battery temperature regulation start time at which operation of the battery temperature regulating device is started based on the air conditioning start time and the battery temperature, not only is it possible to alleviate the burden on the battery by shortening the state in which both the air conditioning device and the battery temperature regulating device are operating, but it is also possible to eliminate the inconvenience for a user to set both the air conditioning start time and the battery temperature regulation start time.

According to a second aspect of the present invention, in addition to the first aspect, the battery temperature control part calculates a battery estimated temperature at the air conditioning start time based on a battery temperature at a time when the user has set the air conditioning start time and a period of time up to the air conditioning start time, calculates a battery effective capacity corresponding to the battery estimated temperature, and sets a battery temperature regulation start time so that the battery effective capacity exceeds a predetermined threshold value or a possible cruising distance calculated from the battery effective capacity exceeds a predetermined threshold value.

In accordance with the second aspect, since the battery temperature control part calculates a battery estimated temperature at the air conditioning start time based on the battery temperature at the time when the user has set the air conditioning start time and the period of time up to the air conditioning start time, calculates a battery effective capacity corresponding to the battery estimated temperature, and sets a battery temperature regulation start time so that the battery effective capacity exceeds a predetermined threshold value or the possible cruising distance calculated from the battery effective capacity exceeds a predetermined threshold value, it is possible to accurately control the battery temperature, thus enabling the maximum possible cruising distance to be obtained after the vehicle departs.

According to a third aspect of the present invention, in addition to the first or second aspect, the control means comprises a timing part, the timing part starts the air conditioning control part and the battery temperature control part with the setting of the air conditioning start time by the user as a trigger, when the timing part determines that the battery temperature regulation start time has arrived, the battery temperature control part starts operation of the battery temperature regulating device, and when the timing part determines that the air conditioning start time has arrived, the air conditioning control part starts operation of the air conditioning device.

In accordance with the third aspect, since the control means includes the timing part, which starts the air conditioning control part and the battery temperature control part with the setting of the air conditioning start time by the user as a trigger, when the timing part determines that the battery temperature regulation start time has arrived the battery temperature control part starts operation of the battery temperature regulating device, and when the timing part determines that the air conditioning start time has arrived the air conditioning control part starts operation of the air conditioning device, not only is it possible to cut the cost compared with a case in which the air conditioning control part and the battery temperature control part are individually provided with the timing part, but it is also possible to prevent a time error from occurring in control of the air conditioning control part and the battery temperature control part.

According to a fourth aspect of the present invention, in addition to the third aspect, the timing part is provided in a vehicle-mounted meter control device.

In accordance with the fourth aspect, since the timing part is provided in a vehicle-mounted meter control device, it is possible to cut the cost by utilizing an existing meter control device without providing a special timing part.

According to a fifth aspect of the present invention, in addition to the first or second aspect, the control means comprises a charging determination part that determines whether or not the battery is connected to a charging facility and is being charged, and when the battery is being charged, the battery temperature control part adjusts a temperature of the battery to a predetermined maintained temperature and calculates a battery estimated temperature at the air conditioning start time based on the maintained temperature and a period of time up to the air conditioning start time.

In accordance with the fifth aspect, since the control means includes the charging determination part, which determines whether or not the battery is connected to the charging facility and is being charged, and when the battery is being charged the battery temperature control part adjusts the temperature of the battery to a predetermined maintained temperature and calculates a battery estimated temperature at the air conditioning start time based on the maintained temperature and the period of time up to the air conditioning start time, it is possible, by adjusting the temperature of the battery to a target temperature with electric power obtained from the charging facility without consuming electric power of the battery, to ensure a maximum possible cruising distance of the vehicle after regulating the battery temperature.

According to a sixth aspect of the present invention, in addition to the first or second aspect, the control means comprises a communication part that acquires future atmospheric temperature information via external communication, and the battery temperature control part sets a battery temperature regulation start time while taking into consideration the future atmospheric temperature information.

In accordance with the sixth aspect, since the control means includes the communication part, which acquires future atmospheric temperature information via external communication, and the battery temperature control part sets the battery temperature regulation start time while taking into consideration the future atmospheric temperature information, it is possible to more accurately adjust the battery temperature while minimizing the influence of temperature change.

According to a seventh aspect of the present invention, in addition to the first or second aspect, the battery temperature control part sets the battery temperature regulation start time to an earlier time than the air conditioning start time.

In accordance with the seventh aspect, since the battery temperature control part sets the battery temperature regulation start time to an earlier time than the air conditioning start time, it is possible to carry out temperature control appropriate for the properties of the battery, in that not only is a longer temperature regulation time required than that for the air conditioning of the interior of the vehicle compartment, but it is also difficult to change the temperature once it has been regulated to an appropriate temperature.

According to an eighth aspect of the present invention, there is provided a power supply device for a vehicle comprising a battery for driving the vehicle, an air conditioning device that carries out air conditioning of an interior of a vehicle compartment with electric power of the battery, a battery temperature regulating device that adjusts a battery temperature with the electric power of the battery, and control means that controls operation of the air conditioning device and the battery temperature regulating device, wherein the control means comprises an air conditioning control part that sets an air conditioning start time at which operation of the air conditioning device is started based on a vehicle departure time preset by a user, and a battery temperature control part that sets a battery temperature regulation start time at which operation of the battery temperature regulating device is started based on the air conditioning start time and a battery temperature.

In accordance with the eighth aspect, the power supply device for a vehicle includes the battery for driving the vehicle, the air conditioning device, which carries out air conditioning of the interior of a vehicle compartment with electric power of the battery, the battery temperature regulating device, which adjusts the battery temperature with the electric power of the battery, and the control means, which controls operation of the air conditioning device and the battery temperature regulating device. Since the control means includes the air conditioning control part, which sets an air conditioning start time at which operation of the air conditioning device is started based on a vehicle departure time preset by a user, and the battery temperature control part, which sets a battery temperature regulation start time at which operation of the battery temperature regulating device is started based on the air conditioning start time and the battery temperature, not only is it possible to alleviate the burden on the battery by shortening the state in which both the air conditioning device and the battery temperature regulating device are operating, but it is also possible to eliminate the inconvenience for a user to set both the air conditioning start time and the battery temperature regulation start time, and moreover it becomes unnecessary to set an air conditioning start time by calculating backward from the vehicle departure time, thus further improving the convenience.

The above and other objects, characteristics and advantages of the present invention will be clear from detailed descriptions of the preferred embodiment which will be provided below while referring to the attached drawings.

### BRIEF DESCRIPTION OF THE DRAWINGS

FIG. 1 is a block diagram of control means of an air conditioning device and a battery temperature regulating device.
FIG. 2 is a time chart of air conditioning control and battery temperature control.
FIG. 3 is a graph showing the relationship between battery temperature and possible cruising distance.
FIG. 4 is a graph showing the relationship between time battery is left standing and battery temperature.
FIG. 5 is a time chart showing change in battery temperature after starting leaving battery standing.
FIG. 6 is a graph showing the relationship between battery temperature at the time of starting warming up and time required for warming up.

### DESCRIPTION OF THE PREFERRED EMBODIMENT

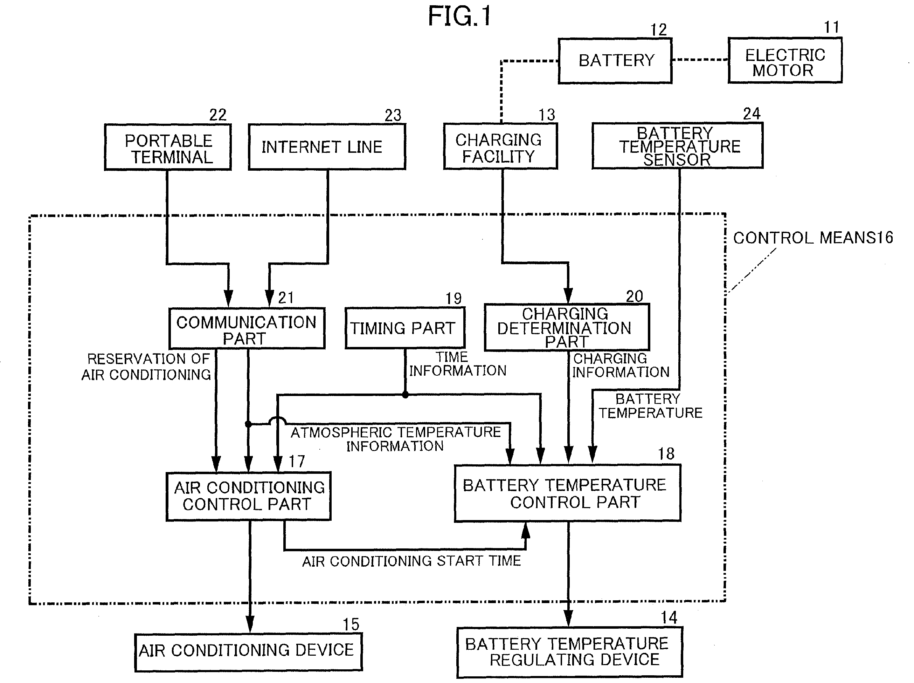

An embodiment of the present invention is explained below by reference to FIG. 1 to FIG. 6.

As shown in FIG. 1, an electric vehicle includes an electric motor 11 for traveling, and a battery 12 for supplying electric power to the electric motor 11 is charged with electric power generated by regenerative braking of the electric motor 11 as well as being charged by being connected via a charging cable to a charging facility 13 disposed on the exterior while the electric vehicle is stationary. When the temperature of the battery 12 is too high or too low, since the possible cruising distance of the electric vehicle is shortened, a battery temperature regulating device 14 for heating or cooling the battery 12 to an appropriate temperature is provided. The battery temperature regulating device 14, which operates with electric power stored in the battery 12, heats the battery 12 by the supply of hot air or hot water and cools the battery 12 by the supply of cooled air or cooled water. The electric vehicle also includes an air conditioning device 15 that is operated with electric power stored in the battery 12 and carries out air conditioning of the interior of a vehicle compartment.

Control means 16 formed from a microcomputer that controls operation of the battery temperature regulating device 14 and the air conditioning device 15 includes an air conditioning control part 17, a battery temperature control part 18, a timing part 19, a charging determination part 20, and a communication part 21.

The timing part 19 has time information and a timer function for outputting cumulative time information from a predetermined time, and a timing part of a meter control device of the vehicle is utilized as it is.

The charging determination part 20 determines that the battery 12 is connected to the charging facility 13 disposed on the exterior and is being charged.

The communication part 21 can carry out communication via a portable terminal 22 possessed by a user or an internet line 23, receives an air conditioning reservation signal sent via the portable terminal 22 from the user, and also receives, among weather forecast information acquired by the internet line 23, information about the current atmospheric temperature and the future atmospheric temperature.

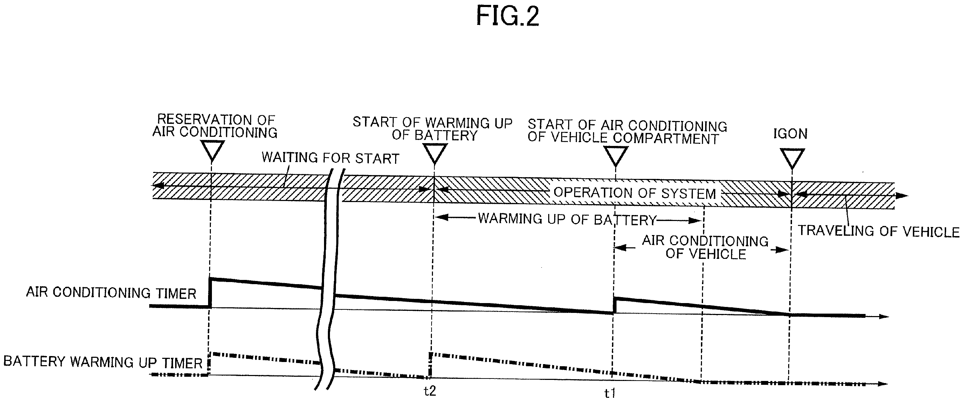

As is clear from further reference to FIG. 1 and FIG. 2, the air conditioning control part 17 calculates an air conditioning start time t1 based on time information inputted from the timing part 19, an air conditioning reservation signal inputted via the communication part 21 from the user, and atmospheric temperature information inputted via the communication part 21, outputs the air conditioning start time t1 to the battery temperature control part 18, and starts the operation of the air conditioning device 15 when the air conditioning start time t1 has arrived. The air conditioning start time t1 is mapped in accordance with the current atmospheric temperature; when carrying out heating, the lower the current atmospheric temperature, the earlier the air conditioning start time t1, and the higher the current atmospheric temperature the later the air conditioning start time t1. The lower the future predicted atmospheric temperature, the earlier the air conditioning start time t1 is corrected to be, and the higher the future predicted atmospheric temperature the later the air conditioning start time t1 is corrected to be.

The battery temperature control part 18 calculates a battery temperature regulation start time t2 based on time information inputted via the timing part 19, future atmospheric temperature information inputted via the communication part 21, the current battery temperature detected by a battery temperature sensor 24, and the air conditioning start time t1 inputted via the air conditioning control part 17, and starts operation of the battery temperature regulating device 14 when the battery temperature regulation start time t2 has arrived. In general, since the time required for regulation of the temperature of the battery 12 is longer than the time required for air conditioning of the interior of the vehicle compartment, the battery temperature regulation start time t2 is an earlier time than the air conditioning start time t1.

Next, a method for setting the battery temperature regulation start time t2 and a battery temperature regulation time (warming up time) is more specifically explained.

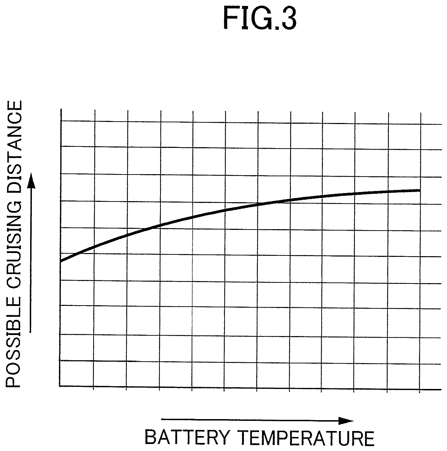

As shown in FIG. 3, the possible cruising distance of the electric vehicle depends on the battery temperature, and when the battery temperature becomes high the possible cruising distance increases. A battery temperature that can give a maximum possible cruising distance is for example 20°C.

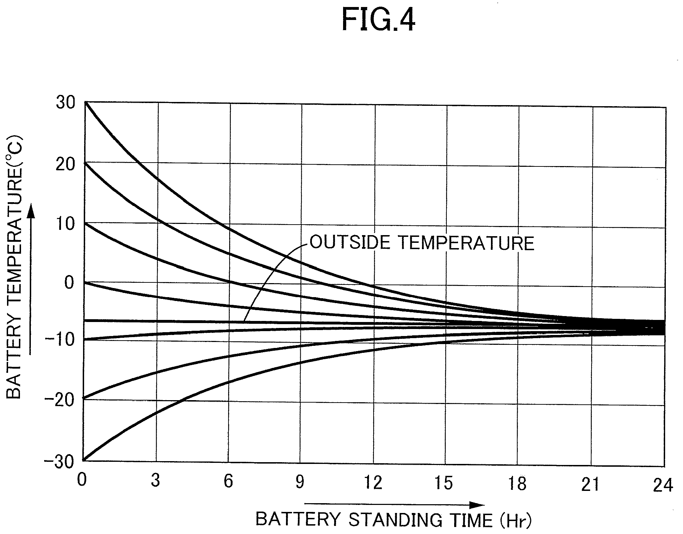

As shown in FIG. 4, if a battery having a different temperature is left to stand without being heated or cooled, the battery temperature changes toward the same temperature as the outside temperature as time elapses. When the battery temperature is higher than the outside temperature, the battery temperature decreases toward the outside temperature, and when the battery temperature is lower than the outside temperature, the battery temperature rises toward the outside temperature.

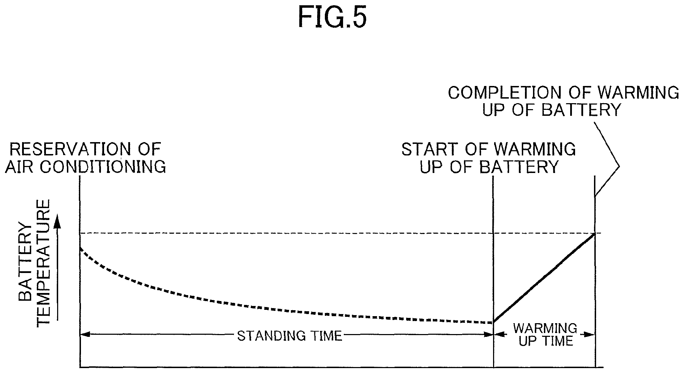

As shown in FIG. 5, when the vehicle finishes traveling and has stopped, since the temperature of the battery is high due to it discharging, the battery temperature is generally higher than the outside temperature, and the battery temperature decreases toward the outside temperature as the elapsed time (standing time) increases after the vehicle has stopped. When the temperature is low, the temperature of the battery becomes low after a long standing time has elapsed, and if the vehicle starts traveling in that state there is the problem that the possible cruising distance is reduced. Therefore, the possible cruising distance can be extended if the battery is heated to an appropriate temperature (for example 20°C) before the vehicle starts traveling.

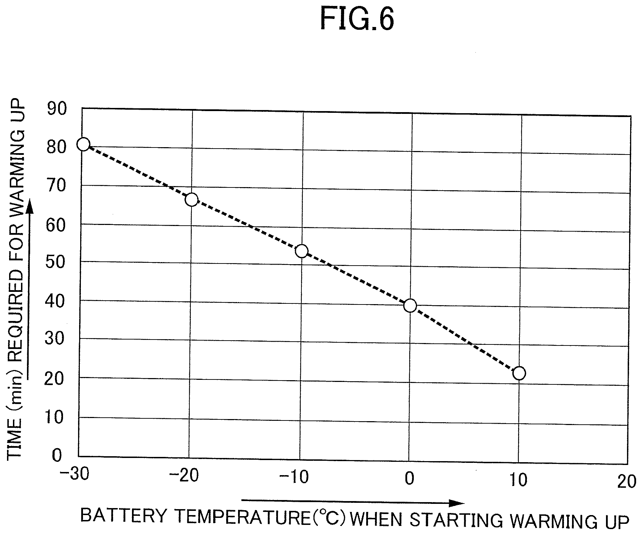

As shown in FIG. 6, when the battery temperature is lower than an appropriate temperature due to the atmospheric temperature being low, the lower the battery temperature at the time of starting warming up, the longer the time (warming up time) required for warming up the battery temperature to an appropriate temperature by heating the battery.

Returning to FIG. 1 and FIG. 2, the battery temperature control part 18 estimates the battery temperature at the time of starting air conditioning from the characteristics shown in the graph of FIG. 4 based on the battery temperature at the time of reservation of air conditioning detected by the battery temperature sensor 24 and the period of time from the time of reservation of air conditioning to the air conditioning start time t1 (that is, the battery standing time). When the battery temperature is estimated, the effective capacity of the battery can be calculated from the battery temperature, and the possible cruising distance can be calculated from the effective capacity of the battery (see FIG. 3).

If the thus estimated possible cruising distance corresponding to the battery temperature at the time of starting air conditioning coincides with a target possible cruising distance, temperature regulation of the battery is unnecessary, but such a case is exceptional, and it is generally the case that the battery temperature at the time of starting air conditioning is too low compared with the temperature that enables a target possible cruising distance to be achieved. Because of this, the battery temperature control part 18 determines the battery temperature regulation start time t2 before the air conditioning start time t1 so that the battery temperature regulating device 14 operates to increase the battery temperature and the battery temperature at the time of starting air conditioning becomes a temperature that enables a target possible cruising distance to be achieved. The time when warming up of the battery is completed is set to be the time when the battery temperature reaches for example 20°C. This enables a maximum possible cruising distance to be obtained after starting the vehicle by accurately controlling the battery temperature without consuming the electric power of the battery for regulating the battery temperature.

Furthermore, when the charging determination part 20 determines that the battery 12 is connected to the charging facility 13, which is external, and is being charged, since it is possible to adjust the temperature of the battery 12 with electric power obtained from the charging facility 13 without consuming the electric power of the battery 12, the temperature of the battery 12 is maintained at a predetermined temperature with the electric power of the charging facility 13 from the time when reservation of air conditioning is carried out, and the battery temperature control part 18 sets the battery temperature regulation start time t2 based on the maintained temperature of the battery 12. This enables a maximum possible cruising distance for the vehicle to be ensured.

Moreover, if the atmospheric temperature is in a rising trend while the vehicle is stationary, since the battery temperature easily increases, it is possible to set a later battery temperature regulation start time t2; on the other hand if the atmospheric temperature is in a decreasing trend, since it is difficult for the battery temperature to rise, it is possible to set an early battery temperature regulation start time t2. Therefore, the battery temperature control part 18 corrects the battery temperature regulation start time t2 based on future atmospheric temperature information obtained from the internet line 23. This enables the battery temperature to be more accurately adjusted while minimizing the influence of temperature change.

As described above, in accordance with the present embodiment, since the battery temperature regulation start time t2 is set earlier than the air conditioning start time t1, it is possible, by shortening the time when both the air conditioning device 15 and the battery temperature regulating device 14 operate at the same time, to alleviate the burden on the battery 12. Moreover, since the battery temperature regulation start time t2 is automatically set merely by a user setting the air conditioning start time t1, the inconvenience of setting both the air conditioning start time t1 and the battery temperature regulation start time t2 is eliminated.

Furthermore, since the timing part 19 starts the air conditioning control part 17 and the battery temperature control part 18 with reservation of air conditioning by a user as a trigger, the battery temperature control part 18 starts operation of the battery temperature regulating device 14 when the timing part 19 determines that the battery temperature regulation start time t2 has arrived, and the air conditioning control part 17 starts operation of the air conditioning device 15 when the timing part 19 determines that the air conditioning start time t1 has arrived, not only is it possible to cut the cost compared with a case in which the air conditioning control part 17 and the battery temperature control part 18 are individually provided with a timing part, but it is also possible to prevent a time error from occurring in control of the air conditioning control part 17 and the battery temperature control part 18. Moreover, since the timing part 19 is provided as standard in a vehicle-mounted meter control device, it is possible to cut the cost by utilizing the existing meter control device without providing a special timing part 19.

Furthermore, since the battery temperature control part 18 sets the battery temperature regulation start time t2 to an earlier time than the air conditioning start time t1, it is possible to carry out temperature control appropriate for the properties of the battery 12, in that a longer temperature regulation time is required than that for the air conditioning of the interior of the vehicle compartment and it is difficult to change the temperature once it has been regulated to an appropriate temperature.

An embodiment of the present invention is explained above, but the present invention may be modified in a variety of ways as long as the modifications do not depart from the gist of the present invention.

For example, in the embodiment, air conditioning of the interior of the vehicle compartment and temperature control of the battery 12 are reserved by a user subtracting the time required for air conditioning of the interior of the vehicle compartment from the vehicle departure time to thus calculate the air conditioning start time t1 and transmitting this air conditioning start time t1 to the vehicle using the portable terminal 22, but instead of setting the air conditioning start time t1 the vehicle departure time may be set. In this case, the air conditioning control part 17 having a vehicle departure time inputted thereinto subtracts from the vehicle departure time the time required for air conditioning to thus calculate the air conditioning start time t1. In accordance with this embodiment, since there is no need for a user to calculate the air conditioning start time t1, the convenience is further improved.

A power supply device for a vehicle includes a battery, an air conditioning device, a battery temperature regulating device, and a control device. The control device includes an air conditioning control part that starts operation of the air conditioning device at an air conditioning start time preset by a user, and a battery temperature control part that sets a battery temperature regulation start time at which operation of the battery temperature regulating device is started based on the air conditioning start time and a battery temperature. Therefore, not only is it possible to alleviate burden on the battery by shortening a state in which both the air conditioning device and the battery temperature regulating device are operating, but it is also possible to eliminate inconvenience for a user to set both the air conditioning start time and the battery temperature regulation start time.

## Claims

1. A power supply device for a vehicle comprising
a battery (12) for driving the vehicle, an air conditioning device (15) that carries out air conditioning of an interior of a vehicle compartment with electric power of the battery (12),
a battery temperature regulating device (14) that is configured to adjust a battery temperature with the electric power of the battery (12), and
control means (16) that is configured to control operation of the air conditioning device (15) and the battery temperature regulating device (14),
wherein the control means (16) comprises
an air conditioning control part (17) that is configured to start operation of the air conditioning device (15) at an air conditioning start time (t1) preset by a user,
**characterized in that** the control means (16) further comprises
a battery temperature control part (18) that is configured to set a battery temperature regulation start time (t2) at which operation of the battery temperature regulating device (14) is started based on the air conditioning start time (t1) and a battery temperature.

2. The power supply device for a vehicle according to Claim 1, wherein the battery temperature control part (18) is configured to calculate a battery estimated temperature at the air conditioning start time (t1) based on a battery temperature at a time when the user has set the air conditioning start time (t1) and a period of time up to the air conditioning start time (t1), calculates a battery effective capacity corresponding to the battery estimated temperature, and is configured to set a battery temperature regulation start time (t2) so that the battery effective capacity exceeds a predetermined threshold value or a possible cruising distance calculated from the battery effective capacity exceeds a predetermined threshold value.

3. The power supply device for a vehicle according to Claim 1 or Claim 2, wherein
the control means (16) comprises a timing part (19),
the timing part (19) is configured to start the air conditioning control part (17) and the battery temperature control part (18) with the setting of the air conditioning start time (t1) by the user as a trigger,
when the timing part (19) determines that the battery temperature regulation start time (t2) has arrived, the battery temperature control part (18) is configured to start operation of the battery temperature regulating device (14), and
when the timing part (19) determines that the air conditioning start time (t1) has arrived, the air conditioning control part (17) is configured to start operation of the air conditioning device (15).

4. The power supply device for a vehicle according to Claim 3, wherein the timing part (19) is provided in a vehicle-mounted meter control device.

5. The power supply device for a vehicle according to Claim 1 or Claim 2, wherein
the control means (16) comprises a charging determination part (20) that is configured to determine whether or not the battery (12) is connected to a charging facility (13) and is being charged, and
when the battery (12) is being charged, the battery temperature control part (18) is configured to adjust a temperature of the battery (12) to a predetermined maintained temperature and is configured to calculate a battery estimated temperature at the air conditioning start time (t1) based on the maintained temperature and a period of time up to the air conditioning start time (t1).

6. The power supply device for a vehicle according to Claim 1 or Claim 2, wherein
the control means (16) comprises a communication part (21) that is configured to acquire future atmospheric temperature information via external communication, and
the battery temperature control part (18) is configured to set a battery temperature regulation start time (t2) while taking into consideration the future atmospheric temperature information.

7. The power supply device for a vehicle according to Claim 1 or Claim 2, wherein the battery temperature control part (18) is configured to set the battery temperature regulation start time (t2) to an earlier time than the air conditioning start time (t1).

8. A power supply device for a vehicle comprising
a battery (12) for driving the vehicle, an air conditioning device (15) that is configured to carry but air conditioning of an interior of a vehicle compartment with electric power of the battery (12),
a battery temperature regulating device (14) that is configured to adjust a battery temperature with the electric power of the battery (12), and
control means (16) that is configured to control operation of the air conditioning device (15) and the battery temperature regulating device (14),
wherein the control means (16) comprises
an air conditioning control part (17) that is configured to set an air conditioning start time (t1) at which operation of the air conditioning device (15) is started based on a vehicle departure time preset by a user,
**characterized in that** the control means (16) further comprises
a battery temperature control part (18) that is configured to set a battery temperature regulation start time (t2) at which operation of the battery temperature regulating device (14) is started based on the air conditioning start time (t1) and a battery temperature.

## Patentansprüche

1. Strom-Versorgung-Vorrichtung für ein Fahrzeug, umfassend:
eine Batterie (12) zum Antreiben des Fahrzeugs, eine Klimaanlage (15), welche eine Luft-Konditionierung eines Innenraums eines Fahrzeugteils mit elektrischer Leistung der Batterie (12) ausführt,
eine Batterie-Temperatur-Regulierung-Vorrichtung (14), welche dazu eingerichtet ist, eine Batterie-Temperatur mit der elektrischen Leistung der Batterie (12) einzustellen, und
ein Steuermittel (16), welches dazu eingerichtet ist, einen Betrieb der Klimaanlage (15) und der Batterie-Temperatur-Regulierung-Vorrichtung (14) zu steuern,
wobei das Steuermittel (16) umfasst
einen Luft-Konditionierung-Steuerteil (17), welcher dazu eingerichtet ist, einen Betrieb der Klimaanlage (15) bei einer Luft-Konditionierung-Startzeit (t1) zu starten, welche durch einen Benutzer vorab festgelegt wird,
**dadurch gekennzeichnet, dass** das Steuermittel (16) ferner umfasst einen Batterie-Temperatur-Steuerteil (18), welcher dazu eingerichtet ist, eine Batterie-Temperatur-Regulierung-Startzeit (t2) festzulegen, bei welcher ein Betrieb der Batterie-Temperatur-Regulierung-Vorrichtung (14) auf Grundlage der Luft-Konditionierung-Startzeit (t1) und einer Batterie-Temperatur gestartet wird.

2. Strom-Versorgung-Vorrichtung für ein Fahrzeug nach Anspruch 1, wobei der Batterie-Temperatur-Steuerteil (18) dazu eingerichtet ist, eine geschätzte Batterie-Temperatur bei der Luft-Konditionierung-Startzeit (t1) auf Grundlage einer Batterie-Temperatur zu einer Zeit zu berechnen, wenn der Benutzer die Luft-Konditionierung-Startzeit (t1) und eine Periode einer Zeit bis zu der Luft-Konditionierung-Startzeit (t1) festgelegt hat, eine effektive Batterie-Kapazität entsprechend der geschätzten Batterie-Temperatur berechnet und dazu eingerichtet ist, eine Batterie-Temperatur-Regulierung-Startzeit (t2) festzulegen, so dass die effektive Batterie-Kapazität einen vorbestimmten Schwellenwert überschreitet oder eine mögliche Fahrt-Distanz, welche von der effektiven Batterie-Kapazität berechnet wird, einen vorbestimmten Schwellenwert überschreitet.

3. Strom-Versorgung-Vorrichtung für ein Fahrzeug nach Anspruch 1 oder Anspruch 2, wobei das Steuermittel (16) einen Zeitbegebung-Teil (19) umfasst,
wobei der Zeitbegebung-Teil (19) dazu eingerichtet ist, den Luft-Konditionierung-Steuerteil (17) und den Batterie-Temperatur-Steuerteil (18) mit der Einstellung der Luft-Konditionierung-Startzeit (t1) durch den Benutzer als einen Auslöser zu starten,
wobei wenn der Zeitbegebung-Teil (19) bestimmt, dass die Batterie-Temperatur-Regulierung-Startzeit (t2) erreicht ist, der Batterie-Temperatur-Steuerteil (18) dazu eingerichtet ist, einen Betrieb der Batterie-Temperatur-Regulierung-Vorrichtung (14) zu starten, und
wobei wenn der Zeitbegebung-Teil (19) bestimmt, dass die Luft-Konditionierung-Startzeit (t1) erreicht ist, der Luft-Konditionierung-Steuerteil (17) dazu eingerichtet ist, einen Betrieb der Klimaanlage (15) zu starten.

4. Strom-Versorgung-Vorrichtung für ein Fahrzeug nach Anspruch 3,
wobei der Zeitbegebung-Teil (19) in einer Messgerät-Steuervorrichtung bereitgestellt ist, welche in einem Fahrzeug angebracht ist.

5. Strom-Versorgung-Vorrichtung für ein Fahrzeug nach Anspruch 1 oder Anspruch 2, wobei
das Steuermittel (16) einen Lade-Bestimmung-Teil (20) umfasst, welcher dazu eingerichtet ist, zu bestimmen, ob die Batterie (12) mit einer Lade-Einrichtung (13) verbunden ist und geladen wird oder nicht, und
wenn die Batterie (12) geladen wird, der Batterie-Temperatur-Steuerteil (18) dazu eingerichtet ist, eine Temperatur der Batterie (12) auf eine vorbestimmte gehaltene Temperatur einzustellen, und dazu eingerichtet ist, eine geschätzte Batterie-Temperatur zu der Luft-Konditionierung-Startzeit (t1) auf Grundlage der gehaltenen Temperatur und einer Periode einer Zeit bis zu der Luft-Konditionierung-Startzeit (t1) zu berechnen.

6. Strom-Versorgung-Vorrichtung für ein Fahrzeug nach Anspruch 1 oder Anspruch 2, wobei
das Steuermittel (16) einen Kommunikation-Teil (21) umfasst, welcher dazu eingerichtet ist, zukünftige atmosphärische Temperatur-Informationen über eine externe Kommunikation aufzunehmen, und der Batterie-Temperatur-Steuerteil (18) dazu eingerichtet ist, eine Batterie-Temperatur-Regulierung-Startzeit (t2) festzulegen, während die zukünftigen atmosphärischen Temperatur-Informationen in Betracht gezogen werden.

7. Strom-Versorgung-Vorrichtung für ein Fahrzeug nach Anspruch 1 oder Anspruch 2, wobei der Batterie-Temperatur-Steuerteil (18) dazu eingerichtet ist, die Batterie-Temperatur-Regulierung-Startzeit (t2) auf eine frühere Zeit festzulegen als die Luft-Konditionierung-Startzeit (t1).

8. Strom-Versorgung-Vorrichtung für ein Fahrzeug, umfassend eine Batterie (12) zum Antreiben des Fahrzeugs, eine Klimaanlage (15), welche dazu eingerichtet ist, eine Luft-Konditionierung eines Innenraums eines Fahrzeugteils mit elektrischer Leistung der Batterie (12) auszuführen,
eine Batterie-Temperatur-Regulierung-Vorrichtung (14), welche dazu eingerichtet ist, eine Batterie-Temperatur mit der elektrischen Leistung der Batterie (12) einzustellen, und
ein Steuermittel (16), welches dazu eingerichtet ist, einen Betrieb der Klimaanlage (15) und der Batterie-Temperatur-Regulierung-Vorrichtung (14) zu steuern,
wobei das Steuermittel (16) umfasst
einen Luft-Konditionierung-Steuerteil (17), welcher dazu eingerichtet ist, eine Luft-Konditionierung-Startzeit (t1), bei welcher ein Betrieb der Klimaanlage (15) gestartet wird, auf Grundlage einer Fahrzeug-Abfahrtszeit festzulegen, welche durch einen Benutzer vorab festgelegt wird,
**dadurch gekennzeichnet, dass** das Steuermittel (16) ferner umfasst einen Batterie-Temperatur-Steuerteil (18), welcher dazu eingerichtet ist, eine Batterie-Temperatur-Regulierung-Startzeit (t2) festzulegen, bei welcher ein Betrieb der Batterie-Temperatur-Regulierung-Vorrichtung (14) auf Grundlage der Luft-Konditionierung-Startzeit (t1) und einer Batterie-Temperatur gestartet wird.

## Revendications

1. Dispositif d'alimentation en énergie pour véhicule comprenant
une batterie (12) pour entraîner le véhicule, et un dispositif de climatisation (15) qui effectue la climatisation d'un intérieur d'habitacle de véhicule avec l'énergie électrique de la batterie (12),
un dispositif de régulation de la température de la batterie (14) qui est configuré pour régler une température de batterie avec l'énergie électrique de la batterie (12), et
des moyens de commande (16) qui sont configurés pour commander le fonctionnement du dispositif de climatisation (15) et le dispositif de régulation de la température de la batterie (14),
dans lequel les moyens de commande (16) comprennent une partie de commande de la climatisation (17) qui est configurée pour démarrer le fonctionnement du dispositif de climatisation (15) à un moment de début de la climatisation (t1) préfixé par un utilisateur, **caractérisé en ce que** les moyens de commande (16) comprennent, en outre,
une partie de commande de la température de la batterie (18) qui est configurée pour fixer un moment de début de régulation de la température de la batterie (t2) auquel le fonctionnement du dispositif de régulation de la température de la batterie (14) est démarré sur la base du moment de début de la climatisation (t1) et d'une température de la batterie.

2. Dispositif d'alimentation en énergie pour véhicule selon la revendication 1, dans lequel la partie de commande de la température de la batterie (18) est configurée pour calculer une température estimée de la batterie au moment du début de la climatisation (t1) sur la base d'une température de la batterie à un moment où l'utilisateur a fixé le moment de début de la climatisation (t1) et un laps de temps jusqu'au moment de début de la climatisation (t1), calcule une capacité effective de la batterie correspondant à la température estimée de la batterie, et est configurée pour fixer un moment de début de régulation de la température de la batterie (t2) de sorte que la capacité effective de la batterie dépasse une valeur seuil prédéterminée ou qu'une distance de croisière possible calculée à partir de la capacité effective de la batterie dépasse une valeur seuil prédéterminée.

3. Dispositif d'alimentation en énergie pour véhicule selon la revendication 1 ou la revendication 2, dans lequel les moyens de commande (16) comprennent une partie de synchronisation (19), la partie de synchronisation (19) est configurée pour démarrer la partie de commande de climatisation (17) et la partie de commande de la température de la batterie (18) lors de la fixation du moment de début de la climatisation (t1) par l'utilisateur comme déclencheur,
lorsque la partie de synchronisation (19) détermine que le moment de début de régulation de la température de la batterie (t2) est arrivé, la partie de commande de la température de la batterie (18) est configurée pour démarrer le fonctionnement du dispositif de régulation de la température de la batterie (14), et lorsque la partie de synchronisation (19) détermine que le moment de début de la climatisation (t1) est arrivé, la partie de commande de la climatisation (17) est configurée pour démarrer le fonctionnement du dispositif de climatisation (15).

4. Dispositif d'alimentation en énergie pour véhicule selon la revendication 3, dans lequel la partie de synchronisation (19) est prévue dans un dispositif de commande du comptage monté sur le véhicule.

5. Dispositif d'alimentation en énergie pour véhicule selon la revendication 1 ou la revendication 2, dans lequel les moyens de commande (16) comprennent une partie de détermination du chargement (20) qui est configurée pour déterminer si la batterie (12) est ou non raccordée à un dispositif de chargement (13) et est en cours de chargement, et lorsque la batterie (12) est en cours de chargement, la partie de commande de la température de la batterie (18) est configurée pour régler une température de la batterie (12) à une température maintenue prédéterminée et est configurée pour calculer une température estimée de la batterie au moment de début de la climatisation (t1) sur la base de la température maintenue et d'un laps de temps jusqu'au moment de début de la climatisation (t1).

6. Dispositif d'alimentation en énergie pour véhicule selon la revendication 1 ou la revendication 2, dans lequel les moyens de commande (16) comprennent une partie de communication (21) qui est configurée pour acquérir de futures informations de température atmosphérique par une communication externe, et
la partie de commande de la température de la batterie (18) est configurée pour fixer un moment de début de régulation de la température de la batterie (t2) tout en tenant compte des futures informations de température atmosphérique.

7. Dispositif d'alimentation en énergie pour véhicule selon la revendication 1 ou la revendication 2, dans lequel la partie de commande de la température de la batterie (18) est configurée pour fixer le moment de début de régulation de la température de la batterie (t2) à un moment antérieur au moment de début de la climatisation (t1).

8. Dispositif d'alimentation en énergie pour véhicule comprenant une batterie (12) pour entraîner le véhicule, un dispositif de climatisation (15) qui est configuré pour effectuer la climatisation d'un intérieur d'habitacle de véhicule avec l'énergie électrique de la batterie (12),
un dispositif de régulation de la température de la batterie (14) qui est configuré pour régler une température de batterie avec l'énergie électrique de la batterie (12), et
des moyens de commande (16) qui sont configurés pour commander le fonctionnement du dispositif de climatisation (15) et le dispositif de régulation de la température de la batterie (14),
dans lequel les moyens de commande (16) comprennent une partie de commande de la climatisation (17) qui est configurée pour fixer un moment de début de la climatisation (t1) auquel le fonctionnement du dispositif de climatisation (15) est démarré sur la base d'un moment de départ du véhicule préfixé par un utilisateur,
**caractérisé en ce que** les moyens de commande (16) comprennent, en outre, une partie de commande de la température de la batterie (18) qui est configurée pour fixer un moment de début de régulation de la température de la batterie (t2) auquel le fonctionnement du dispositif de régulation de la température de la batterie (14) est démarré sur la base du moment de début de la climatisation (t1) et d'une température de la batterie.
